(19)

Europäisches
Patentamt
European
Patent Office
Office européen
des brevets

(11)　　**EP 1 677 463 B1**

(12)　　　　　　**EUROPEAN PATENT SPECIFICATION**

(45) Date of publication and mention
of the grant of the patent:
**30.07.2008  Bulletin 2008/31**

(51) Int Cl.:
***H04L 12/56*** *(2006.01)*

(21) Application number: **04258188.4**

(22) Date of filing: **30.12.2004**

(54) **Method and apparatus for selecting a transport format combination**

Verfahren und Vorrichtung zur Auswahl einer Transportformatkombination

Procédé et appareil pour sélectionner une combinaison de format de transport

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(43) Date of publication of application:
**05.07.2006  Bulletin 2006/27**

(73) Proprietor: **Research In Motion Limited
Waterloo, Ontario N2L 3W8 (CA)**

(72) Inventors:
• **Roberts, Gideon Edmund
M-Stack Ltd.,
Birmingham, B1 2RA (GB)**

• **Hjelmeland Egil
7040 Trondheim (NO)**
• **Oksas, Ingunn Skogstad
Trondheim 7031 (NO)**
• **Knotten, Hege
7026 Trondheim (NO)**

(74) Representative: **Roberts, Gwilym Vaughan et al
Kilburn & Strode
20 Red Lion Street
London WC1R 4PJ (GB)**

(56) References cited:
**EP-A- 1 206 083　　　EP-A- 1 349 332
WO-A-01/63855　　　WO-A-20/04111875
GB-A- 2 401 760**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

**Description**

TECHNICAL FIELD

The present invention relates, in general, to the field of Medium Access Control (MAC) mechanisms in wireless communication networks, and, in particular, to a method and apparatus for selecting a Transport Format Combination (TFC).

BACKGROUND

In wireless communication networks, a mobile device and a Radio Access Network (RAN) in a synchronized session coordinate the flow of control and user data, such as transmission control, text, voice, image, and video data, through the wireless network to and from other communication devices through either other wireless communication networks, a Public Switched Telephone Network (PSTN), or a Packet Data Switching Network (PDSN). Mobile devices have evolved into complex computing machines offering a wide variety of services comparable to that of personal computers. Therefore, the concentration of data the mobile device and the RAN must process in a synchronized fashion has increased significantly. The processing mechanisms used in the mobile devices and the RAN typically have greater processing responsibilities when compared to computers within a land line based network considering the sensitivity of the radio link connecting the mobile device and the RAN. Therefore, considering the extension of wireless services and the additional process control procedures required to compensate this sensitivity, processing inefficiencies can result in increased power consumption, delays, inefficient use of the radio link, and disrupted services.

In particular with respect to the mobile device and the RAN, a Medium Access Control (MAC) mechanism provides logical channels to a Radio Link Control (RLC) mechanism in order to multiplex data units from the logical channels onto transport channels provided by a physical layer mechanism so that the physical layer mechanism can code the data units into data frames in order to transmit the data over a physical channel. The MAC mechanism provides a complex service for the RLC mechanism by selecting from an extensive table of information a Transport Format Combination (TFC) identifying Transport Formats (TF) for each transport channel within each Transmission Time Interval (TTI). This complicated process within a short period of time requires extensive processing power, and in the case of the mobile device excessive processing power, that still may not prevent delay and processing failures.

EP-A-1206083 discloses a procedure for selecting the respective most favourable transport format combination at the beginning of a radio frame. GB-A-2401760 discloses selecting a transport format by a medium access control layer by first selecting a transport block size to be used in each transport channel in the next transport time interval. WO-A-0163855 discloses packet scheduling in accordance with quality of service constraints data flows.

Therefore, there is a need to streamline processing procedures in order to facilitate complex processing procedures.

The present invention is set out in the claims

**SUMMARY**

To overcome limitations identified within the background, a method and apparatus are provided for selecting transport format combination in a Medium Access Control (MAC) mechanism.

In an embodiment, a TFC selection mechanism is provided for selecting a transport format combination utilized in a mechanism of a wireless communication network for multiplexing data units between logical channels and transport channels. Upon receiving a configuration table comprising information identifying at least one logical and transport channel, a transport format set, and a transport format combination set, the TFC selection mechanism prioritizes and sorts the configuration table so that upon the presence of data at a logical channel the TFC selection mechanism can select the most compatible transport format combination in the most efficient manner possible in the transmission time interval of a transmission frame.

In the embodiment, the TFC selection mechanism upon receiving the channel configuration table prioritizes each transport channel, sorts the at least one transport format according to a minimum buffer occupancy of each transport format associated with each prioritized transport channel; wherein associated with each sorted transport format is a minimum and maximum buffer occupancy, and at least one transport format combination which use a transport format of a size equal to or less than the maximum buffer occupancy. The TFC selection mechanism further sorts the transport channels according to increasing transmission time interval, and sorts the logical channels according to increasing transmission time interval and decreasing priority for each logical channel.

In the embodiment, the TFC selection mechanism, upon the presence of data units having a logical channel size at a logical channel, compares the transmission time interval of the transport channel associated with the logical channel with the transmission time interval of a current frame available for transmission to determine if transmission is possible. If transmission is possible, the TFC selection mechanism selects a transport format combination by comparing the logical channel size with the minimum and maximum buffer occupancy of each sorted transport format associated with a transport channel associated with the logical channel, wherein each sorted transport format has associated therewith at least one transport format combination identified as not exceeding logical channel size restrictions so that a transport format combination having at least one transport format of the most compatible size can be selected.

BRIEF DESCRIPTION OF THE DRAWINGS

Fig. 1A illustrates the process steps associated with sorting the logical and transport channel tables according to different parameters to provide a more efficient TFC selection process;

Fig. 1B illustrates the process steps associated with selecting an appropriate TFC using the sorted tables upon the presence of data units available for transport between logical and transport channels;

Fig. 2 illustrates elements of a link layer mechanism relevant to an embodiment of the invention used in wireless networking equipment utilizing a MAC mechanism incorporating the TFC selection mechanism;

Fig. 3 illustrates an exemplary embodiment of a protocol structure of a UMTS wireless network utilizing the TFC selection mechanism; and

Fig. 4 illustrates an exemplary embodiment of a UMTS wireless network incorporating protocol structure of Figure 3 utilizing the TFC selection mechanism.

DETAILED DESCRIPTION

While the use and implementation of particular embodiments of the present invention are presented in detail below, it will be understood that the present invention provides many inventive concepts, which can be embodied in a wide variety of contexts. The specific embodiments discussed herein are merely illustrative of specific ways to make and use the invention and are not intended to limit the scope of the invention.

A Transport Format Combination (TFC) selection mechanism utilized in a Medium Access Control (MAC) mechanism for efficiently providing a TFC identifying Transport Formats (TF) used for multiplexing data units onto transport channels is presented. The MAC mechanism upon channel configuration either by session initialization or a data rate update during a session receives logical and transport channel configuration tables. The logical channel configuration table, see Table 1 below as an exemplary illustration, may comprise information such as Radio Bearer (RB) mapping and identification information, logical channel identification information, logical channel priority information, RLC data unit size restrictions, and Dedicated Channel (DCH) identification information.

*Table 1*

| RB map index | 2 | 4 | 8 | 6 | 10 |
|---|---|---|---|---|---|
| RB id | 13 | 15 | 19 | 17 | 21 |
| Logical | 11 | 9 | 13 | 11 | 14 |
| Priority | 8 | 2 | 3 | 4 | 1 |
| RLC-size restrict | all | all | 1 | 2 | all |
| DCH id | 3 | 5 | 5 | 5 | 7 |

The transport channel configuration table, see Table 2A, 2B, and 2C below as an exemplary illustration, comprises information such as transport channel identification information, DCH identification information, Transmission Time Interval (TTI), see Table 2A below, Transport Format Sets (TFS), and Transport Format Combination Sets (TFCS). The TFS comprises the Transport Formats (TF), which identifies Transport Block (TB) sizes and number of TB for each transport channel, see Table 2B below. The TFCS identifies the Transport Format Combination's (TFC) that identifies the TF for each transport channel, see Table 2C below.

*Table 2A*

| 40ms | 20ms | 80ms |
|---|---|---|
| DCH3 | DCH5 | DCH7 |
| TrCh1 | TrCh2 | TrCh3 |

*Table 2B*

| TFS1 | TFS2 | TFS3 |
|---|---|---|
| $TF_{1,1}$ (32, 0) | $TF_{2,1}$ (40, 2) | $TF_{3,1}$ (320, 0) |
| $TF_{1,2}$ (32, 1) | $TF_{2,2}$ (40, 1) | $TF_{3,2}$ (320, 1) |
| $TF_{1,3}$ (32, 2) | $TF_{2,3}$ (40, 0) | |
| | $TF_{2,4}$ (45, 1) | |

*Table 2C*

| TFCS | TrCh1 | TrCh2 | TrCh3 |
|---|---|---|---|
| TFC1 | $TF_{1,1}$ | $TF_{2,3}$ | $TF_{3,1}$ |
| TFC2 | $TF_{1,2}$ | $TF_{2,3}$ | $TF_{3,1}$ |
| TFC3 | $TF_{1,1}$ | $TF_{2,2}$ | $TF_{3,1}$ |
| TFC4 | $TF_{1,3}$ | $TF_{2,1}$ | $TF_{3,1}$ |
| TFC5 | $TF_{1,2}$ | $TF_{2,2}$ | $TF_{3,1}$ |
| TCF6 | $TF_{1,1}$ | $TF_{2,3}$ | $TF_{3,2}$ |

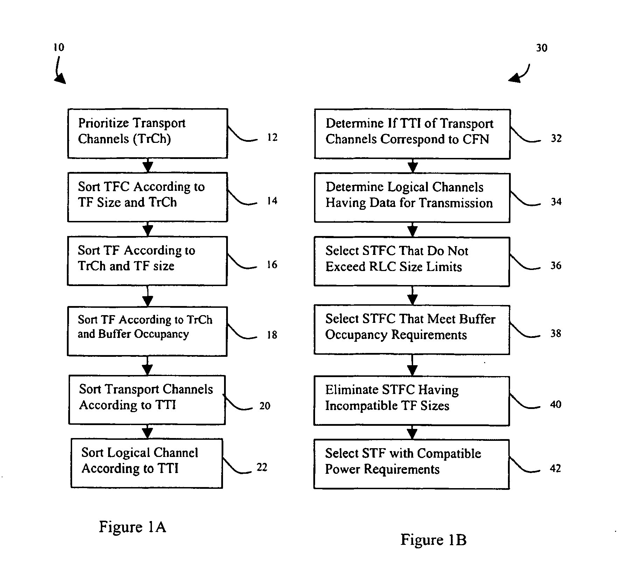

In Figures 1A and 1B, the process flow steps associated with the TFC selection mechanism are illustrated and denoted generally as 10 and 30 respectively. Specifically, Figure 1A illustrates the process steps associated with sorting the logical and transport channel tables according to different parameters to provide a more efficient TFC selection process. Figure 1B illustrates the process steps associated with selecting an appropriate TFC using the sorted tables upon the presence of data units available for transport between logical and transport channels.

In Figure 1A, at step 12 upon receipt of the configuration tables the TFC selection mechanism prioritizes the transport channels according to the priority of the logical channels, for example TrCh3 maybe assigned the highest priority, TrCh2 medium priority, and TrCh1 low priority. Next, at step 14, the TFC selection mechanism creates a sorted TFC table comprising TFC sorted according to TF size and transport channel priority, see Table 3 below.

*Table 3*

| STFCS | TFCS | TrCh3(Pri High) | TrCh2 (Pri | TrCh1 (Pri |
|---|---|---|---|---|
| STFC1 | TFC6 | $TF_{3,2}$ (320, 1) | $TF_{2,3}$ (40, 0) | $TF_{1,1}$ (32, 0) |
| STFC2 | TFC4 | $TF_{3,1}$ (320,0) | $TF_{2,1}$ (40,2) | $TF_{1,3}$ (32,2) |
| STFC3 | TFC5 | $TF_{3,1}$ (320, 0) | $TF_{2,2}$ (40, 1) | $TF_{1,2}$ (32, 1) |
| STFC4 | TFC3 | $TF_{3,1}$ (320, 0) | $TF_{2,2}$ (40, 1) | $TF_{1,1}$ (32, 0) |
| STFC5 | TFC2 | $TF_{3,1}$ (320, 0) | $TF_{2,3}$ (40, 0) | $TF_{1,2}$ (32, 1) |
| STFC6 | TFC1 | $TF_{3,1}$ (320, 0) | $TF_{2,3}$ (40, 0) | $TF_{1,1}$ (32, 0) |

Next, at step 16, the TFC selection mechanism creates a sorted TF table comprising TF sorted according to the prioritized transport channels and increasing size of the associated TF and identifies only the TFC applicable to each TF of each TFS, see Table 4 below. For example, a subset of each TFS may only be relevant for each transport channel. Therefore, identification allows quick association of TF and TFC per prioritized transport channel.

*Table 4*

| TrCh3 | STF1 STF2 | $TF_{3,1}$ (320, 0) | STFC2, STFC3,STFC4,STFC5,STFC6 STF2 |
|---|---|---|---|
| TrCh2 | STF3 STF4 STF5 | $TF_{2,3}$ (40, 0) $TF_{2,2}$ (40, | STFC1, STFC5, STFC6 STFC3, STFC4 STFC2 |
| TrCh1 | STF6 | $TF_{1,1}$ (32, 0) | STFC1, STFC4, STFC6 |

(continued)

| | | | |
|---|---|---|---|
| STF7 | TF$_{1,2}$ (32, | STFC3, STFC5 | |
| STF8 | | STFC2 | |

Next, step 18, the TFC selection mechanism creates a sorted TF table comprising TF sorted according to transport channel priority and increasing minimum buffer occupancy (BO), Equation 1, with identification of associated maximum BO, Equation 2, identification of associated RLC size, and identification of TFC which use a buffer occupancy equal to or falls within the calculated minimum and maximum buffer occupancy, see Table 5 below. The RLC size is a dynamic value populated by the TFC selection mechanism according to the data unit size at a logical channel.

$$Min\ BO = \max\left(0, (n-1)*s+1\right) \qquad Eq.\ 1$$

$$Max\ BO = n*s \qquad Eq.\ 2$$

Where n equals the number of TB's and s is the size of each TB in bits. The formula minimizes the chance padding bits will have to be used to accommodate RLC data units not fully utilizing transport channel memory buffers.

*Table 5*

| TrCh3 | STF1 | TF$_{3,1}$ (320, 0) | (RLC Size) | Min BO 0 | Max BO 0 | STFC2,3,4,5,6 |
| | STF2 | | | | | STFC1 |
| TrCh2 | STF3 | TF$_{2,3}$ (40, 0) | (RLC Size) | Min BO 0 | Max BO 0 | STFC1,5,6 |
| | STF4 | TF$_{2,2}$ (40, 1) | (RLC Size) | Min BO1 | Max BO 40 | STFC3, 4 |
| | STF5 | | | | | STFC2 |
| TrCh1 | STF6 | TF$_{1,1}$ (32, 0) | (RLC Size) | Min BO 0 | Max BO 0 | STFC1, 4,6 |
| | STF7 | TF$_{1,2}$ (32,1) | (RLC Size) | Min BO1 | Max BO 32 | STFC3,5 |
| | STF8 | TF$_{1,3}$ (32, 2) | (RLC Size) | Min B0 33 | Max BO 64 | STFC2 |

Although the separate creation of Table 4 is not necessary, it allows for a more efficient construction of Table 5 at configuration time. Next, step 20, the TFC selection mechanism creates a sorted transport channel table comprising transport channels sorted according to increasing TTI with identification to the first and last sorted TF of Table 4, the selected logical channel, and the selected TF, see Table 6. Selected Lch and TF are dynamic values periodically changing.

*Table 6*

| TTI | TrCh | First STFI | Last STFI | Selected Lch | Selected STF |
|---|---|---|---|---|---|
| 2 | 2 | 3 | 5 | Lch$_z$ | STF$_{x,y}$ |
| 4 | 1 | 6 | 8 | Lch$_z$ | STF$_{x,y}$ |
| 8 | 3 | 1 | 2 | Lch$_z$ | STF$_{x,y}$ |

Next, step 22, the TFC selection mechanism creates a sorted logical channel table comprising logical channels sorted according to increasing TTI and decreasing priority with identification to RLC size restrictions and TFC comprising TF's of a transport channel that satisfy the RLC size restriction or TFC's comprising TF's of a transport channel having a zero for the TB size, see Table 7 below. Although process steps indicated creation of Table 6 before Table 7, the order of creation between the two is not necessary. Although Tables 1-7 provide illustrative value, the tables are only examples comprising a limited number of parameters in order to help facilitate explanation of the inventive aspects. In practice, these tables may comprise a much more extensive list of information and values.

*Table 7*

| TTI | TrCh | Lch | Size ID Restrictions | STFC |
|---|---|---|---|---|
| 2 | 2 | 9 (PRI 2) | All | STFC1,2,3,4,5,6 |
| 2 | 2 | 13 (PRI 3) | 40 | STFC1,2,3,4,5,6 |
| 2 | 2 | 11 (PRI 4) | 45 | STFC1,5,6 |
| 4 | 1 | 11 (PRI 8) | All | STFC1,2,3,4,5,6 |
| 8 | 3 | 14 (PRI 1) | All | STFC1,2,3,4,5,6 |

The process steps of Figure 1A are procedural steps for constructing tables at configuration time to be used when data units at logical channels are available for transport channel multiplexing. Figure 1B illustrates the procedural steps involved in utilizing the sorted tables to efficiently select an appropriate TFC within a TTI of a transmission frame. At step 32, the TFC selection mechanism checks Table 6 to determine if any transport channels have a TTI starting at the current Connection Frame Number (CFN). For each transport channel identified, TFC selection must be performed. If there is more than one transport channel having a corresponding TTI, the TFC selection mechanism process the highest priority channel first. Next, step 34, the TFC selection mechanism determines which logical channels associated with the selected transport channel have data for transmission. If there is more than one logical channel, the TFC selection mechanism selects the highest priority logical channel and populates the selected logical channel field in Table 6. Next, step 36, once a transport channel with a compatible TTI is selected; the TFC selection mechanism queries Table 7 to select the STFC that do not exceed RLC size restrictions. At step 38, with the logical and transport channel identification, TTI, and STFC not exceeding RLC size restrictions, the TFC selection mechanism queries Table 5 and compares buffer occupancy of the data associated with the selected logical channel with the minimum and maximum buffer occupancy of of each TF associated with the identified transport channel in order to identify from the remaining STFC those that meet the BO requirements. Next, step 40, the TFC selection mechanism eliminates STFC having incompatible TF's. The TFC selection mechanism determines which transport channels are currently in use and which are not in use and according to this information the TFC selection mechanism eliminates any STFC having incompatible TF's. In other words, for each of the transport channels associated with the current TTI or for each of the transport channels sending data at the current TTI, the TFC selection mechanism may eliminate TFC having incompatible TF sizes. In addition, the TFC selection mechanism may eliminate any STFC having TF's incompatible with transport channels not having data available during a TTI. Of the STFC identified, the TFC selection mechanism selects the highest priority STFC and populates the selected STF field of table 6 with the STF of the selected STFC. At step 42, the TFC selection mechanism identifies the TF of Table 4 of the selected STF from Table 5 and compares the power requirements of the TF with the power available for the current transmission frame in order to determine if transmission of the selection is possible. If transmission is possible, the TFC associated with the selected STFC is identified in Table 3 and provided to the MAC to multiplex the logical channel carrying the data onto the appropriate transport channel. If the power control level is not suitable for the current TFC, then the next highest priority STFC from the remaining STFC is selected. The selected STFC is retained for a period of time in order to determine compatibility of TFC in process step 40.

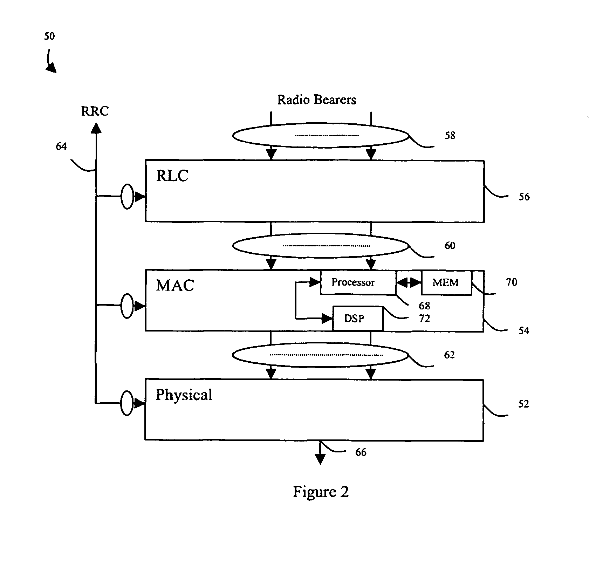

Referring now to figure 2, illustrated are elements of a link layer mechanism relevant to an embodiment of the invention used in wireless networking equipment utilizing a MAC mechanism incorporating the TFC selection mechanism denoted generally as 50. Link layer mechanism 50 comprises a physical layer mechanism 52, a Medium Access Control (MAC) mechanism 54, a Radio Link Control (RLC) mechanism 56, Radio Bearers (RB) 58, logical channels 60, transport channels 62, control channels 64, and a physical channel 66. Physical layer mechanism 52 provides transport channels to MAC 54 and codes TBs present on the transport channels into frames to be transmitted over physical channel 52. MAC 54 comprises a microprocessor 68, memory 70, and Digital Signal Processor (DSP) 72 for providing logical channels 60 to RLC mechanism 56, receiving configuration tables from a Radio Resource Control (RRC) mechanism over control channels 64, prioritizing the transport channels, sorting the tables according to the process steps identified in Figure 1A, and multiplexing logical channels 60 onto transport channels using TFC selected according to the process identified in Figure 1B. RLC mechanism 56 provides RB's 58 for control and user plane data, process control functions, and mapping of data onto logical channels. MAC 54 comprises the resources necessary to execute the TFC selection mechanism as illustrated and described in reference to Figures 1A and 1B. MAC 54 comprises several functions responsible for multiplexing data present on logical channels onto a composite of transport channels, referred to in the industry as a Coded Composite Transport Channel (CCTrCh) to be transmitted over a dedicated physical channel within a TTI. However, the various functions outside of the TFC selection mechanism are well known to persons of skill in the art and therefore for the sake of clarity with respect to novelty of the invention will not be recited here.

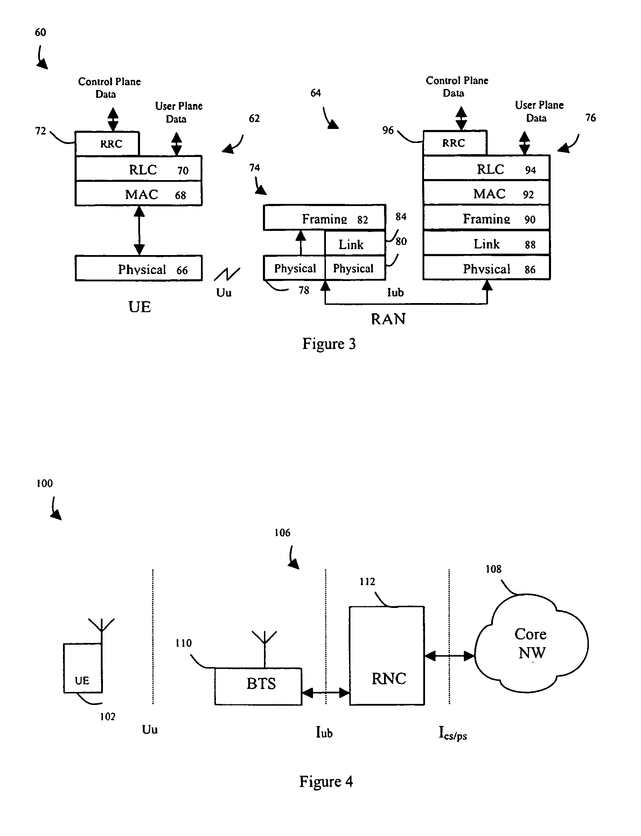

Referring now to Figure 3, illustrated is a UMTS wireless protocol structure for the interface between a User Equipment (UE) and a Radio Access Network (RAN), where the TFC selection mechanism utilized in conjunction with a MAC processing mechanism may be utilized to improve processing efficiencies, denoted generally as 60. Protocol structure 60 comprises a User Equipment (UE) protocol stack 62 and a Radio Access Network (RAN) protocol stack 64. The UE protocol stack 62 comprises a physical layer 66, a MAC layer 68, a RLC layer 70, and a RRC layer 72 for providing radio access over a Uu interface to control and user plane data. Upper layer protocols managing control plane data may be, for example, Mobility Management (MM) and Session Management (SM) protocols, and upper layer protocols managing user plane data may be, for example, IP and TCP. However, since the details of these layers are not germane to the essence of the invention, the specific details of such have been excluded for the sake of clarity. The RAN protocol stack 64 may include a base transceiver station protocol stack 74 and a radio network controller protocol stack 76. The base transceiver station protocol stack 74 comprises a physical layer 78, 80 for processing modulated radio channels according to the UMTS standard for the Uu interface and processing data signals according to the UMTS standard for an Iub interface. The base transceiver station protocol stack 64 further comprises a framing protocol 82 for framing data according to the Iub interface, a link layer protocol 84, such as an Asynchronous Transfer Mode and an ATM adaptation layer (AAL) protocol, for multiplexing data onto the physical layer 80. The radio network controller protocol stack 76 may also comprise a physical layer 86, a link layer 88, and a framing protocol layer 90, for interfacing over the Iub interface to the base transceiver station. The radio network controller protocol stack 76 may further comprises a MAC layer 92, an RLC layer 94, and a RRC layer 96 for processing control and user plane data for communication between the UE and the radio network controller. Specific details of the various protocol layers, with the exception of the improvements of processing efficiencies provided by the TFC selection mechanism utilized in connection with MAC layer 68, 92 can be found within relevant 3G standards documentation and therefore will not be recited here. The TFC selection mechanism as described with reference to Figures 1A, 1B, and 2 may be utilized in connection with MAC layer 68 and 92 so that upon receipt of a configuration table the TFC selection mechanism prioritizes and sorts table information as described with reference to Figures 1A and upon determining the presence of data units at logical channels efficiently selects a transport format combination using the sorted tables as described in Figure 1B.

Referring now to Figure 4, illustrated is an a UMTS wireless network, where the TFC selection mechanism utilized within MAC processing mechanism may be embodied to improve processing efficiencies, denoted generally as 100. Wireless network 100 comprises a User Equipment (UE) 102, a RAN 106 and a core network 108 for providing communications to and from a Packet Data Switched Network (PDSN) and Public Switched Telephone Network (PSTN). UE 102 may be a communications device for providing access to voice and data services over a Uu air interface to the RAN 106. The RAN includes a BTS 110 for processing radio channels over the Uu air interface and data channels over the Iub interface and a RNC 112 for processing data channels over the Iub interface and circuit switched and packet switched data channels over the Ics/ps interface. Although the illustration only includes one BTS and one RNC, in practice the RNC may support multiple BTS and core networks may support multiple RNC's. The TFC selection mechanism as described in references to Figures 1A, 1B and 2 utilized within a MAC processing mechanism may be implemented within both the UE 102 and RNC 112 or as a stand alone mechanism within either UE 102 or RNC 120. Implementation of TFC selection mechanism within a MAC processing mechanism may provide greater advantages when implemented within UE 102. The TFC selection mechanism upon receipt of configuration tables, through session initialization or data rate updates, prioritizes the transport channels and sorts the tables as specified in Figure 1A. Upon determining the presence of data units at logical channels provided to the RLC by the MAC mechanism, the TFC selection mechanism determines the transport format combination according to the procedures identified with reference to Figure 1B.

Although the structure and features of the 3G UMTS protocol structure and network of Figures 3 and 4 respectively, outside of the TFC selection mechanism as described with reference to Figures 1A, 1B and 2, are well known to those skilled in the particular art, the TFC selection mechanisms embodiment within this particular structure is not intended to be an implementation limitation since the TFC selection mechanism may be utilized in any protocol structure and network using a MAC processing mechanism multiplexing logical channels onto transport channels as described above.

While the use and implementation of particular embodiments of the present invention are presented in detail below, it will be understood that the present invention provides many inventive concepts, which can be embodied in a wide variety of contexts. The specific embodiments discussed herein are mere illustrations of specific ways for making and using the invention and are not intended to limit the scope of the invention.

**Claims**

1. A method of selecting a transport format combination in a Medium Access Control mechanism (54) of a wireless communication network for multiplexing data units between logical channels and transport channels and receiving a configuration table comprising information identifying at least one logical channel, logical channel prioritization, size restrictions of logical channel data, at least one transport channel having association with the at least one logical channel, a transmission time interval associated with each of the transport channels, and a transport format combination set comprising at least one transport format combination wherein each transport format combination comprises a transport format for each transport channel, the method comprising the steps:

   prioritizing (12) each transport channel according to the priority of the at least one associated logical channel upon receiving the configuration table;
   sorting (18) the at least one transport format upon receiving the configuration table according to priority of the transport channels and a minimum buffer occupancy of each transport format associated with each transport channel, wherein each sorted transport format has associated therewith a maximum buffer occupancy, and at least one transport format combination which uses a transport format of a size equal to or less than the maximum buffer occupancy associated with the transport format;
   for a current connection frame number, selecting at least one transport channel having a corresponding transmission time interval;
   for each transport channel selected, selecting a logical channel having data available for transmission; and
   selecting (38) a transport format combination upon determining the presence of data having a logical channel size at a logical channel by comparing, for each transport channel selected, the size of the selected logical channel with the minimum and maximum buffer occupancy of each sorted transport format associated with a transport channel associated with the logical channel, wherein each sorted transport format has associated therewith at least one transport format combination identified as not exceeding logical channel size restrictions so that a transport format combination having at least one transport format of the most compatible size can be selected.

2. The method as recited in Claim 1 further comprising the step of sorting the transport format combinations of the transport format combination set according to the priority of the transport channel and the size of the transport format associated with each transport format combination.

3. The method as recited in Claim 2 wherein the at least one transport format combination which use a transport format of a size equal to or less than a maximum buffer occupancy associated with the transport format is a sorted transport format combination sorted according to the priority of the transport channel and size of the transport format.

4. The method as recited in Claim 1 further comprising the step of sorting the transport formats associated with the transport format set according to priority of the transport channel and size of the transport formats with identification associated therewith to transport format combinations comprising the transport format.

5. The method as recited in Claim 1 further comprising the step of sorting transport channels according to increasing transmission time interval.

6. The method as recited in Claim 1 further comprising the step of sorting the logical channels according to transmission time interval and priority of each logical channel.

7. The method as recited in Claim 6 further comprising the step of identifying at least one sorted transport format combinations not exceeding the logical channel size restrictions.

8. The method as recited in Claim 1 further comprising the step of eliminating transport format combinations comprising incompatible transport formats.

9. A medium access control mechanism in a wireless communication network for selecting a transport format combination and receiving a configuration table comprising information identifying at least one logical channel, logical channel prioritization, size restrictions of logical channel data, at least one transport channel having association with the at least one logical channel, a transmission time interval associated with each of the transport channels, and a transport format combination set comprising at least one transport format combination wherein each transport format combination comprises a transport format for each transport channel, the mechanism comprising:

prioritization means for prioritizing the transport channels according to the priority of the associated at least one logical channel, responsive to receiving the configuration table;

transport format sorting means for sorting the at least one transport format according to priority of the transport channels and a minimum buffer occupancy of each transport format associated with each transport channel, further responsive to receiving the configuration table, wherein each sorted transport format has associated therewith a maximum buffer occupancy, and at least one transport format combination which uses a transport format of a size equal to or less than the maximum buffer occupancy associated with the transport format; and transport channel selection means arranged to select, for a current connection frame number, at least one transport channel having a corresponding transmission time interval;

logical channel selection means arranged to select, for each transport channel selected, a logical channel having a date available for transmission;

transport format selection means for selecting, upon determining the presence of data having a logical channel size at a logical channel, a transport format combination by comparing, for each transport channel selected, the size of the selected logical channel with the minimum and maximum buffer occupancy of each sorted transport format associated with a transport channel associated with the logical channel, wherein each sorted transport format has associated therewith at least one transport format combination identified as not exceeding logical channel size restrictions so that a transport format combination having at least one transport format of the most compatible size can be selected.

10. The mechanism for selecting a transport format as recited in Claim 9 further comprising a transport means arranged to sort the transport format combinations of the transport format combination set according to the priority of the transport channel and the size of the transport format associated with each transport format combination.

11. The mechanism for selecting a transport format as recited in Claim 10 wherein the at least one transport format combination which uses a transport format of a size equal to or less than a maximum buffer occupancy associated with the transport format is a sorted transport format combination sorted according to the priority of the transport channel and size of the transport format.

12. The mechanism for selecting a transport format as recited in Claim 9 wherein the transport format sorting means is arranged to sort the transport formats associated with the transport format set according to priority of the transport channel and size of the transport formats with identification associated therewith to transport format combinations comprising the transport format.

13. The mechanism for selecting a transport format as recited in Claim 9 wherein the transport format sorting means is arranged tosort transport channels according to increasing transmission time interval.

14. The mechanism for selecting a transport format as recited in Claim 9 further comprising a logical channel sorting means arranged to sort the logical channels according to transmission time interval and priority of each logical channel.

15. The mechanism for selecting a transport format as recited in Claim 14 wherein the logical channel sorting means is arranged to identify at least one sorted transport format combination not exceeding the logical channel size restrictions.

16. The mechanism for selecting a transport format as recited in Claim 9 wherein the mechanism is arranged to eliminate sorted transport format combinations comprising incompatible transport formats.

## Patentansprüche

1. Verfahren zur Auswahl einer Transportformatkombination in einem "Medium Access Control"-Mechanismus (54) eines drahtlosen Kommunikationsnetzwerks zum Multiplexen von Dateneinheiten zwischen logischen Kanälen und Transportkanälen und Empfangen einer Konfigurationstabelle, die Information aufweist, die zumindest einen logischen Kanal, eine "logischer Kanal"-Priorisierung, Größenbeschränkungen von "logischer Kanal"-Daten, zumindest einen Transportkanal mit einer Assoziation mit dem zumindest einen logischen Kanal, ein Übertragungszeitintervall, das zu jedem der Transportkanäle gehört, und einen Transportformatkombinationssatz identifiziert, der zumindest eine Transportformatkombination aufweist, wobei jede Transportformatkombination ein Transportformat für jeden Transportkanal aufweist, wobei das Verfahren die Schritte aufweist:

Priorisieren (12) jedes Transportkanals gemäß der Priorität des zumindest einen zugehörigen logischen Kanals bei Empfang der Konfigurationstabelle;

Sortieren (18) des zumindest einen Transportformats bei Empfang der Konfigurationstabelle gemäß einer Priorität der Transportkanäle und einer Minimum-Puflerbelegung jedes Transportformats, das zu jedem Transportkanal gehört, wobei jedes sortierte Transportformat eine maximale Pufferbelegung zugeordnet hat, und zumindest einer Transportformatkombination, die ein Transportformat einer Größe verwendet, die gleich ist oder kleiner als die maximale Pufferbelegung, die zu dem Transportformat gehört;

Wählen für eine aktuelle Verbindungsrahmenanzahl zumindest eines Transportkanals mit einem entsprechenden Übertragungszeitintervall;

Wählen, für jeden gewählten Transportkanal, eines logischen Kanals, der Daten zur Übertragung verfügbar hat; und

Wählen (38) einer Transportformatkombination bei Bestimmung des Vorhandenseins von Daten mit einer Größe des logischen Kanals an einem logischen Kanal durch Vergleichen, für jeden gewählten Transportkanal, der Größe des gewählten logischen Kanals mit der Minimum- und Maximum-Pufferbelegung jedes sortierten Transportformats, das zu einem Transportkanal gehört, der zu dem logischen Kanal gehört, wobei jedes sortierte Transportformat zumindest eine Transportformatkombination zugeordnet hat, die identifiziert ist als keine Größenbeschränkungen des logischen Kanals übersteigend, so dass eine Transportformatkombination, die zumindest ein Transportformat der kompatibelsten Größe hat, gewählt werden kann.

2. Verfahren gemäß Anspruch 1. das weiter aufweist den Schritt des Sortierens der Transportformatkombinationen des Transportformatkombinationssatzes gemäß der Priorität des Transportkanals und der Größe des Transportformats, das zu jeder Transportformatkombination gehört.

3. Verfahren gemäß Anspruch 2, wobei die zumindest eine Transportformatkombination, die ein Transportformat einer Größe verwendet, die gleich oder kleiner ist als eine maximale Pufferbelegung, die zu dem Transportformat gehört, eine sortierte Transportformatkombination ist, die gemäß der Priorität des Transportkanals und der Größe des Transportformats sortiert ist.

4. Verfahren gemäß Anspruch 1. das weiter den Schritt aufweist des Sortierens der Transportformate, die zu dem Transportformatsatz gehören, gemäß der Priorität des Transportkanals und der Größe der Transportformate mit dazugehöriger Identifikation, um Formatkombinationen zu transportieren, die das Transportformat aufweisen.

5. Verfahren gemäß Anspruch 1, das weiter den Schritt aufweist des Sortierens der Transportkanäle gemäß einem zunehmenden Übertragungszeitintervall.

6. Verfahren gemäß Anspruch 1, das weiter den Schritt aufweist des Sortierens der logischen Kanäle gemäß Übertragungszeitintervall und Priorität jedes logischen Kanals.

7. Verfahren gemäß Anspruch 6, das weiter den Schritt aufweist des Identifizierens zumindest von einer sortierten Transportformatkombination, welche die Größenbeschränkungen des logischen Kanals nicht übersteigt.

8. Verfahren gemäß Anspruch 1. das weiter den Schritt aufweist des Eliminierens von Transportformatkombinationen, die inkompatible Transportformate aufweisen.

9. "Medium Access Control"-Mechanismus in einem drahtlosen Kommunikationsnetzwerk zur Auswahl einer Transportformatkombination und zum Empfangen einer Konfigurationstabelle, die Information aufweist, die zumindest einen logischen Kanal, eine "logischer Kanal"-Priorisierung, Größenbeschränkungen von "logischer Kanal"-Daten, zumindest einen Transportkanal mit einer Assoziation mit dem zumindest einen logischen Kanal, ein Übertragungszeitintervall, das zu jedem der Transportkanäle gehört, und einen Transportformatkombinationssatz identifiziert, der zumindest eine Transportformatkombination aufweist, wobei jede Transportformatkombination ein Transportformat für jeden Transportkanal aufweist, wobei der Mechanismus aufweist:

Priorisierungsmittel zum Priorisieren der Transportkanäle gemäß der Priorität des zugehörigen zumindest einen logischen Kanals bei Empfang der Konfigurationstabelle;

Transportformatsortiermittel zum Sortieren des zumindest einen Transportformats gemäß einer Priorität der Transportkanäle und einer Minimum-Pufferbelegung jedes Transportformats, das zu jedem Transportkanal gehört, bei Empfang der Konfigurationstabelle, wobei jedes sortierte Transportformat eine maximale Pufferbelegung zugeordnet hat, und zumindest einer Transportformatkombination, die ein Transportformat einer Größe verwendet, die gleich ist oder kleiner als die maximale Pufferbelegung, die zu dem Transportformat gehört; und Transportkanalauswahlmittel, das ausgebildet ist, für eine aktuelle Verbindungsrahmenanzahl zumindest einen Transportkanal mit einem entsprechenden Übertragungszeitintervall auszuwählen;

Logikkanalauswahlmittel, das ausgebildet ist, für jeden gewählten Transportkanal einen logischen Kanal zu wählen, der Daten zur Übertragung verfügbar hat;

Transportformatauswahlmittel zur Auswahl einer Transportformatkombination bei Bestimmung des Vorhandenseins von Daten mit einer Größe des logischen Kanals an einem logischen Kanal durch Vergleichen, für jeden gewählten Transportkanal, der Größe des gewählten logischen Kanals mit der Minimum- und Maximum-Pufferbelegung jedes sortierten Transportformats, das zu einem Transportkanal gehört, der zu dem logischen Kanal gehört, wobei jedes sortierte Transportformat zumindest eine Transportformatkombination zugeordnet hat, die identifiziert ist als keine Größenbeschränkungen des logischen Kanals übersteigend, so dass eine Transportformatkombination, die zumindest ein Transportformat der kompatibelsten Größe hat, gewählt werden kann.

10. Mechanismus zur Auswahl eines Transportformats gemäß Anspruch 9, der weiter aufweist ein Transportmittel, das ausgebildet ist, die Transportformatkombinationen des Transportformatkombinationssatzes gemäß der Priorität des Transportkanals und der Größe des Transportformats, das zu jeder Transportformatkombination gehört, zu sortieren.

11. Mechanismus zur Auswahl eines Transportformats gemäß Anspruch 10, wobei die zumindest eine Transportformatkombination, die ein Transportformat einer Größe verwendet, die gleich oder kleiner ist als eine maximale Pufferbelegung, die zu dem Transportformat gehört, eine sortierte Transportformatkombination ist, die gemäß der Priorität des Transportkanals und der Größe des Transportformats sortiert ist.

12. Mechanismus zur Auswahl eines Transportformats gemäß Anspruch 9, wobei das Transportformatsortiermittel ausgebildet ist, die Transportformate zu sortieren, die zu dem Transportformatsatz gehören, gemäß der Priorität des Transportkanals und der Größe der Transportformate mit dazugehöriger Identifikation, um Formatkombinationen zu transportieren, die das Transportformat aufweisen.

13. Mechanismus zur Auswahl eines Transportformats gemäß Anspruch 9. wobei das Transportformatsortiermittel ausgebildet ist. Transportkanäle gemäß einem zunehmenden Übertragungszeitintervall zu sortieren.

14. Mechanismus zur Auswahl eines Transportformats gemäß Anspruch 9, der weiter ein Logikkanalsortiermittel aufweist, das ausgebildet ist, die logischen Kanäle gemäß Übertragungszeitintervall und Priorität jedes logischen Kanals zu sortieren.

15. Mechanismus zur Auswahl eines Transportformats gemäß Anspruch 14, wobei das Logikkanalsortiermittel ausgebildet ist, zumindest eine sortierte Transportformatkombination zu identifizieren, welche die Größenbeschränkungen des logischen Kanals nicht übersteigt.

16. Mechanismus zur Auswahl eines Transportformats gemäß Anspruch 9, wobei der Mechanismus ausgebildet ist, sortierte Transportformatkombinationen zu eliminieren, die inkompatible Transportformate aufweisen.

**Revendications**

1. Procédé de sélection d'une combinaison de formats de transport dans un mécanisme de commande de l'accès au support (54) d'un réseau de communication sans fil, destiné à multiplexer des unités de données entre des canaux logiques et des canaux de transport et à recevoir une table de configuration comprenant des informations qui identifient au moins un canal logique, un classement des canaux logiques par priorité, des restrictions de taille imposées aux données des canaux logiques, au moins un canal de transport ayant une association avec ledit au moins un canal logique, un intervalle de temps d'émission associé à chacun des canaux de transport et un ensemble de combinaisons de formats de transport comprenant au moins une combinaison de formats de transport, chaque combinaison de formats de transport comprenant un format de transport pour chaque canal de transport, le procédé comprenant les étapes consistant à :

attribuer une priorité (12) à chaque canal de transport en fonction de la priorité dudit au moins un canal logique associé, après réception de la table de configuration ;
trier (18) ledit au moins un format de transport après réception de la table de configuration, en fonction de la priorité des canaux de transport et d'une occupation minimale de la mémoire tampon par chaque format de transport associé à chaque canal de transport, chaque format de transport trié étant associé à une occupation maximale de la mémoire tampon et à au moins une combinaison de formats de transport qui utilise un format de transport d'une taille inférieure ou égale à l'occupation maximale de la mémoire tampon associée au format de transport ;

pour un numéro courant de trame de connexion, sélectionner au moins un canal de transport ayant un intervalle de temps d'émission correspondant ;

pour chaque canal de transport sélectionné, sélectionner un canal logique ayant des données prêtes à être émises ; et

sélectionner (38) une combinaison de formats de transport après avoir déterminé la présence de données ayant une taille de canal logique sur un canal logique, en comparant, pour chaque canal de transport sélectionné, la taille du canal logique sélectionné avec les occupations minimale et maximale de la mémoire tampon de chaque format de transport trié associé à un canal de transport associé au canal logique, chaque format de transport étant associé à au moins une combinaison de formats de transport identifiée comme n'outrepassant pas des restrictions de taille de canal logique, afin de pouvoir sélectionner une combinaison de formats de transport ayant au moins un format de transport de la taille la plus compatible.

2. Procédé selon la revendication 1, comprenant en outre l'étape consistant à trier les combinaisons de formats de transport dans l'ensemble de combinaisons de formats de transport en fonction de la priorité du canal de transport et de la taille du format de transport associé à chaque combinaison de formats de transport.

3. Procédé selon la revendication 2, dans lequel ladite au moins une combinaison de formats de transport qui utilise un format de transport d'une taille inférieure ou égale à une occupation maximale de la mémoire tampon associée au format de transport est une combinaison de formats de transport triée, classée en fonction de la priorité du canal de transport et de la taille du format de transport.

4. Procédé selon la revendication 1, comprenant en outre l'étape consistant à trier les formats de transport associés à l'ensemble de formats de transport en fonction de la priorité du canal de transport et de la taille des formats de transport avec identification associés par celle-ci à des combinaisons de formats de transport comprenant le format de transport.

5. Procédé selon la revendication 1, comprenant en outre l'étape consistant à trier des canaux de transport sur la base d'un intervalle de temps d'émission croissant.

6. Procédé selon la revendication 1, comprenant en outre l'étape consistant à trier des canaux de transport sur la base de l'intervalle de temps d'émission et de la priorité de chaque canal logique.

7. Procédé selon la revendication 1, comprenant en outre l'étape consistant à identifier au moins une des combinaisons de formats de transport triées qui n'outrepasse pas les restrictions de taille de canal logique.

8. Procédé selon la revendication 1, comprenant en outre l'étape consistant à éliminer des combinaisons de formats de transport contenant des formats de transport incompatibles.

9. Mécanisme de commande de l'accès au support dans un réseau de communication sans fil, destiné à sélectionner une combinaison de formats de transport et à recevoir une table de configuration comprenant des informations qui identifient au moins un canal logique, un classement des canaux logiques par priorité, des restrictions de taille imposées aux données des canaux logiques, au moins un canal de transport ayant une association avec ledit au moins canal logique, un intervalle de temps d'émission associé à chacun des canaux de transport et un ensemble de combinaisons de formats de transport comprenant au moins une combinaison de formats de transport, chaque combinaison de formats de transport comprenant un format de transport pour chaque canal de transport, le mécanisme comprenant :

un moyen de classement par priorité, destiné à attribuer une priorité aux canaux de transport en fonction de la priorité dudit au moins un canal logique associé, en réponse à la réception de la table de configuration ;

un moyen de tri de formats de transport, destiné à trier ledit au moins un format de transport en fonction de la priorité des canaux de transport et d'une occupation minimale de la mémoire tampon par chaque format de transport associé à chaque canal de transport, toujours en réponse à la réception de la table de configuration, chaque format de transport trié étant associé à une occupation maximale de la mémoire tampon et à au moins une combinaison de formats de transport qui utilise un format de transport d'une taille inférieure ou égale à l'occupation maximale de la mémoire tampon associée au format de transport ;

un moyen de sélection de canal de transport conçu, pour un numéro courant de trame de connexion, pour sélectionner au moins un canal de transport ayant un intervalle de temps d'émission correspondant ;

un moyen de sélection de canal logique conçu, pour chaque canal de transport sélectionné, pour sélectionner un canal logique ayant des données prêtes à être émises ; et

un moyen de sélection de format de transport conçu pour sélectionner, après avoir déterminé la présence de données ayant une taille de canal logique sur un canal logique, une combinaison de formats de transport en comparant, pour chaque canal de transport sélectionné, la taille du canal logique sélectionné avec les occupations minimale et maximale de la mémoire tampon de chaque format de transport trié associé à un canal de transport associé au canal logique, chaque format de transport trié étant associé à au moins une combinaison de formats de transport identifiée comme n'outrepassant pas des restrictions de taille de canal logique, afin de pouvoir sélectionner une combinaison de formats de transport ayant au moins un format de transport de la taille la plus compatible.

10. Mécanisme de sélection d'un format de transport selon la revendication 9, comprenant en outre un moyen de transport conçu pour trier les combinaisons de formats de transport de l'ensemble de combinaisons de formats de transport en fonction de la priorité du canal de transport et de la taille du format de transport associé à chaque combinaison de formats de transport.

11. Mécanisme de sélection d'un format de transport selon la revendication 10, dans lequel ladite au moins une combinaison de formats de transport qui utilise un format de transport d'une taille inférieure ou égale à une occupation maximale de la mémoire tampon associée au format de transport est une combinaison de formats de transport triée, classée en fonction de la priorité du canal de transport et de la taille du format de transport.

12. Mécanisme de sélection d'un format de transport selon la revendication 9, dans lequel le moyen de tri des formats de transport est conçu pour trier les formats de transport associés à l'ensemble de formats de transport en fonction de la priorité du canal de transport et de la taille des formats de transport avec identification associés par celle-ci à des combinaisons de formats de transport comprenant le format de transport.

13. Mécanisme de sélection d'un format de transport selon la revendication 9, dans lequel le moyen de tri de formats de transport est conçu pour trier des canaux de transport sur la base d'un intervalle de temps d'émission croissant.

14. Mécanisme de sélection d'un format de transport selon la revendication 9, comprenant en outre un moyen de tri de canaux logiques conçu pour trier des canaux de transport sur la base de l'intervalle de temps d'émission et de la priorité de chaque canal logique.

15. Mécanisme de sélection d'un format de transport selon la revendication 14, dans lequel le moyen de tri de canaux logiques est conçu pour identifier au moins une des combinaisons de formats de transport triées qui n'outrepasse pas les restrictions de taille de canal logique.

16. Mécanisme de sélection d'un format de transport selon la revendication 9, dans lequel le mécanisme est conçu pour éliminer des combinaisons de formats de transport contenant des formats de transport incompatibles.

10

30

| Prioritize Transport Channels (TrCh) | 12 |

↓

| Sort TFC According to TF Size and TrCh | 14 |

↓

| Sort TF According to TrCh and TF size | 16 |

↓

| Sort TF According to TrCh and Buffer Occupancy | 18 |

↓

| Sort Transport Channels According to TTI | 20 |

↓

| Sort Logical Channel According to TTI | 22 |

| Determine If TTI of Transport Channels Correspond to CFN | 32 |

↓

| Determine Logical Channels Having Data for Transmission | 34 |

↓

| Select STFC That Do Not Exceed RLC Size Limits | 36 |

↓

| Select STFC That Meet Buffer Occupancy Requirements | 38 |

↓

| Eliminate STFC Having Incompatible TF Sizes | 40 |

↓

| Select STF with Compatible Power Requirements | 42 |

Figure 1A

Figure 1B

50

RRC

64

Radio Bearers

58

RLC

56

60

MAC

Processor ◄► MEM

70

68
72

DSP

54

62

Physical

52

66

Figure 2

60

Control Plane
Data

User Plane
Data

72

RRC

RLC 70

MAC 68

Physical 66

Uu

UE

64

62

74

Framing 82

Link

Physical | Physical

78

84

80

Iub

96

Control Plane
Data

User Plane
Data

76

RRC

RLC 94

MAC 92

Framing 90

Link 88

Physical 86

RAN

Figure 3

100

106

112

108

110

UE

102

BTS

RNC

Core
NW

Uu

Iub

I$_{cs/ps}$

Figure 4

16

**EP 1 677 463 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1206083 A
- GB 2401760 A
- WO 0163855 A